# EUROPEAN PATENT APPLICATION

(11) **EP 3 243 697 A1**
(43) Date of publication of application: **15.11.2017**
(21) Application number: 17170904.1
(22) Date of filing: 12.05.2017
(51) Int. Cl.: B60N 2/68, B60N 2/70

(54) **REINFORCED ERGONOMIC SEAT FOR RACING VEHICLES, PARTICULARLY FOR KARTS**

(30) Priority: 12.05.2016 IT UA20163387
(71) Applicant: Bresin, Brunella, 33170 Pordenone (IT)
(72) Inventor: Piazza, Pierpaolo, 33170 Pordenone (IT); Piazza, Andrea, 33170 Pordenone (IT); Granzotto, Marco, 30020 Marcon (IT)
(74) Representative: Dalla Rosa, Adriano

(57) **Abstract**

Reinforced ergonomic seat (10) for racing vehicles, particularly for karts, adapted to house a driver in such a way as to increase the safety and the drive comfort, and particularly to absorb the forces generated during the guide in the phases of acceleration, of deceleration, and during the curves and for limiting the wear and the possibility of breaking of the same seat due to the mechanical stresses in to the fixing points to the frame of the vehicle and due to the impacts with the ground, said seat (10) being made with a shaped shell by a plurality of layers of different materials overlapped to each other, constituted by at least two lower layers of fiberglass, by a plurality of intermediate reinforcing elements (31) overlapped to said first lower layers, and each constituted by a layer of reinforcing fibers, preferably synthetic aramid fibers and/or carbon fibers, and by at least two upper layers overlapped to said intermediate reinforcing layers (31) and constituted by fiberglass, said seat (10) comprising a seatback (11) joined to a seat (12), both closed laterally by two vertical side flanks (18, 19), said seatback (11) being inclined in the rear part from the bottom to the top with a concave curvature, and being joined at its lower part to the zone of the seat (12), comprising a first lower flat part (13) and a second front part (14) which is extended in front of said first flat part (13) with an inclination directed upward, said second front part (14) being joined with two horizontal side projected portions (17), joined to each other, for ensuring to the driver a correct driving position and the support of the legs of the same one, said seatback (11), said seat (12) and two side vertical flanks (18, 19) being shaped for containing and protecting the body and the thighs of the driver and for ensuring a side flexion and torsion of the so built seat (10), during the entire distance covered by the kart onto which it is assembled.

## Description

The invention relates to a reinforced ergonomic seat for racing vehicles, particularly for karts, adapted to improve the wrapping and the comfort of the driver and consequently the safety and the drive performances.

At the present time, there are known seats, adapted to be fixed through brackets and fastenings to the frame of the kart, which are realized integral solely with fiberglass and shaped with a shell shape, in particular with a slightly curved seatback joined to a flat seat that is extended frontally with two little side portions adapted to support the thighs of the driver, furthermore, the seat is provided with two flanks, which join the seatback and the seat, slightly curved inward the same seat and with an almost triangular side profile.

These seats are very tiring for the driver, since the legs for being well supported by the seat, onto which the driver is seated, must be practically stretched, whereas during the kart driving, for the size of this latter, the legs must work in a flexed position.

An additional problem deriving by the fact that the karts are not provided of suspensions and that the above said seats are stiff, is that in the curve phase or in the acceleration phase during the driving of the same kart, there aren't provided some means adapted to absorb the forces being generated, such as for example the centrifugal force, and the seats, being almost non-deformable, cannot adapt themselves to the shape of the driver's back that is so subjected to the above said forces, therefore these seats are less ergonomic and tire the driver's back thereby reducing the driving safety.

Another problem derived by the use of the above said seats, made of fiberglass only, is the fact that the lower part of their seat is free and positioned to a very low level, therefore during the driving phase the seat often comes into contact with the ground, which is constituted by asphalt or by kerbs made of concrete, and therefore it is subjected to the abrasion and impacts, that may cause breakings of the same seat and therefore to become dangerous for the driver.

The object of the present invention is to realize a reinforced ergonomic seat for racing vehicles, in particular for karts, that eliminate the above said problems of safety and comfort for the driver. This reinforced ergonomic seat is realized with the constructive characteristics that will be described, given by way of a not limitative example only and with particular reference to the accompanying claims and drawings, in which :

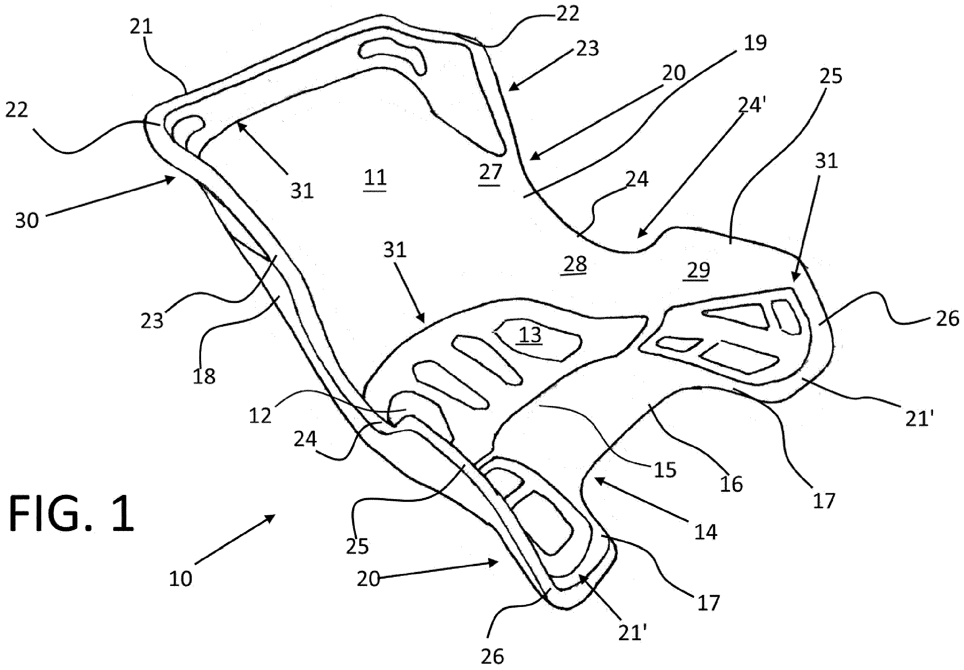

- Fig. 1 shows a perspective side view from the top of the reinforced ergonomic seat, according to the invention ;

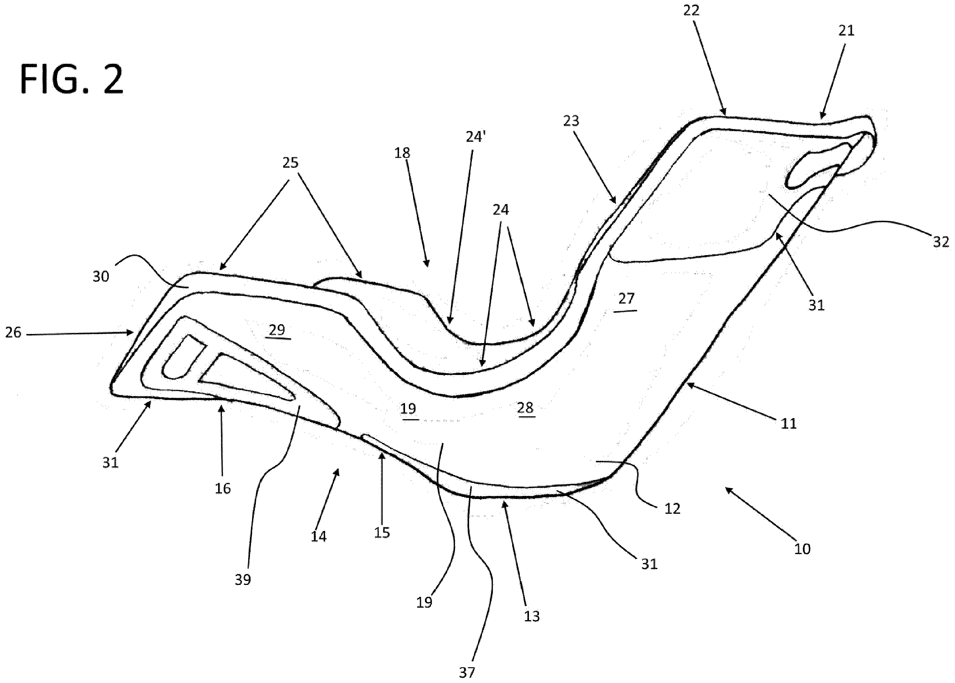

- Fig. 2 shows a perspective side view of the seat of Fig. 1 ;

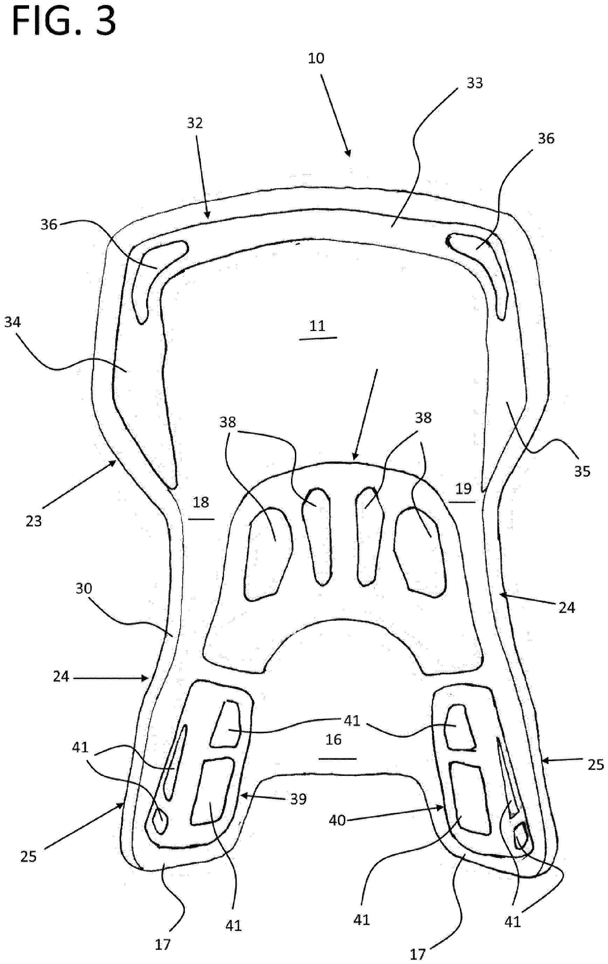

- Fig. 3 shows a perspective front view from the top of the seat of Fig. 1 ;

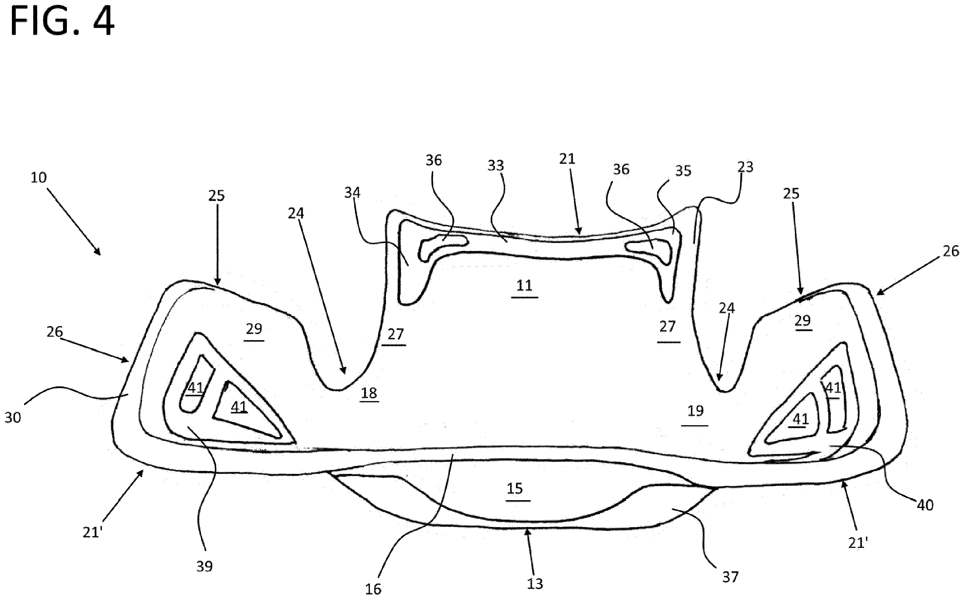

- Fig. 4 shows a perspective front view of the seat of Fig. 1 ;

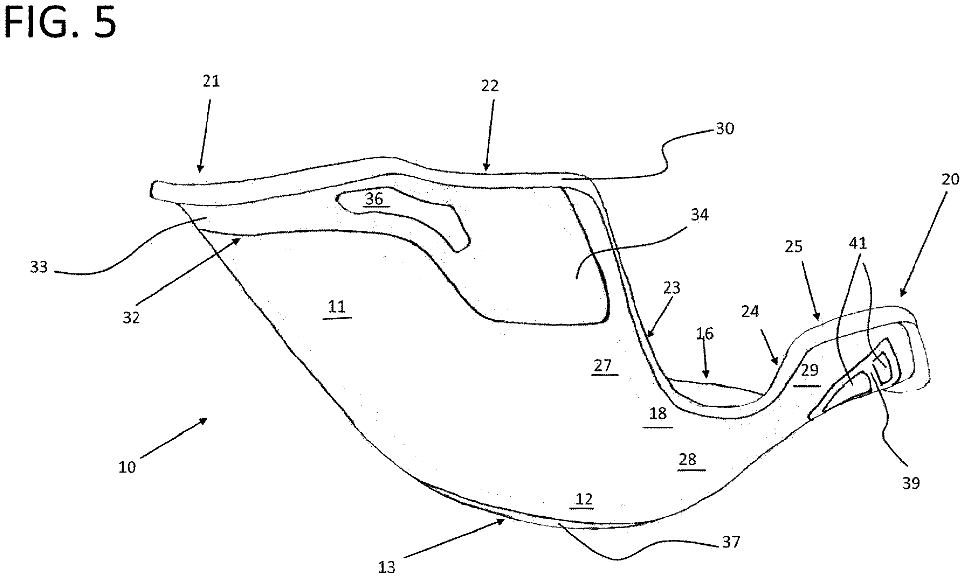

- Fig. 5 shows a perspective side and back view of the seat of Fig. 1 ;

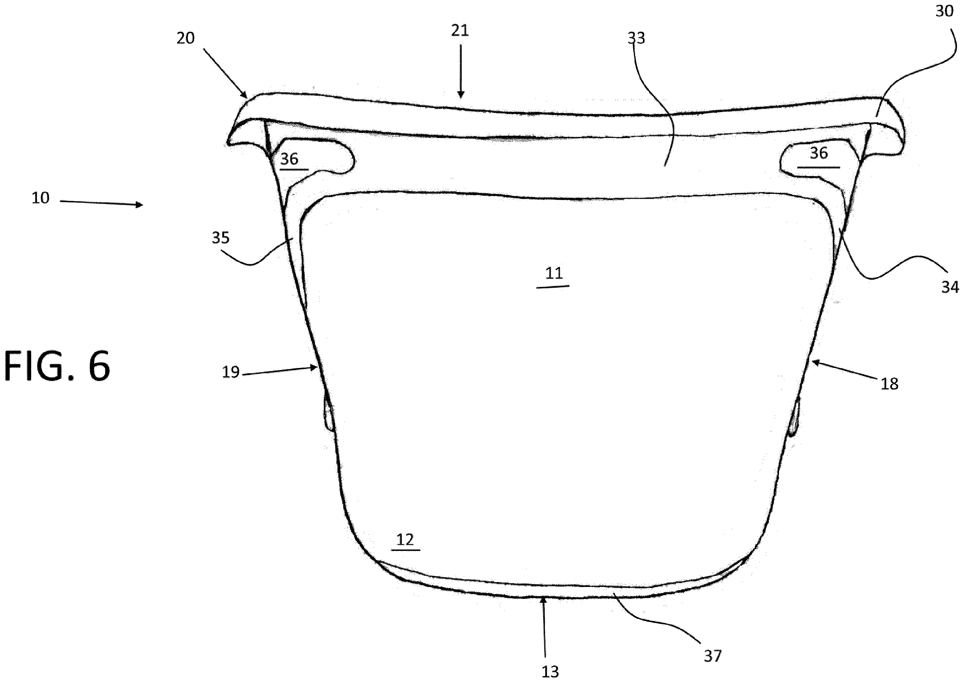

- Fig. 6 shows a perspective back view of the seat of Fig. 1 ;
- Fig. 7 shows a perspective front view of the reinforced ergonomic seat, in a second embodiment thereof, according to the invention ;
- Fig. 8 shows an enlarged item of the seat of Fig. 7 .

The present invention relates to a reinforced ergonomic seat for racing vehicles, particularly for karts, adapted to house a driver in such a way as to increase the safety and the drive comfort, and particularly for absorbing the forces generated during the guide in the phases of acceleration, of deceleration, and during the curves and for limiting the wear and the possibility of breaking of the same seat due to the mechanical stresses in to the fixing points to the frame of the vehicle and to the impacts with the ground.

The reinforced ergonomic seat 10, object of the present invention, is made with a shaped shell shape with a plurality of layers of different materials overlapped to each other, which materials are constituted by at least two lower layers of fiberglass, by a plurality of intermediate reinforcing elements overlapped to said first lower layers, and each one constituted by a layer of reinforcing fibers, preferably aramid synthetic fiber and/or carbon fiber, and by at least two upper layers overlapped to said intermediate reinforcing layers and constituted by fiberglass.

Said seat 10 comprises a seatback 11 inclined rearwards from the bottom to the top with a concave curvature, and which seatback 11 is joined at its lower part to the zone of the seat 12, which comprises a first lower flat part 13, which is extended frontally in a second front part 14 positioned at a higher level, initially with a lower convex curved profile 15 that is joined with a flat profile 16, which ends finally frontwards with two horizontal side projected portions 17 joined to each other. The seatback 11 together with the seat 12 are laterally closed by two side vertical flanks 18 and 19, which have an upper profile 20 shaped as it will be described.

Said upper profile 20 joins the upper edge 21 of the seatback 11 to the front edge 21' of said side portions 17, and has a first horizontal part 22, that continues approximately up to the vertical of the back part of the seat 12, a second part inclined frontally 23, that continues downward approximately up to the middle of the seatback 11 and the middle of the seat 12, a third part curved concave upward 24, with the lowest point that remains in an upper position with respect to the horizontal side portions 17 and that continues approximately up to the middle of the curved profile 15 of the part 14 of the seat 12, a fourth part almost horizontal 25 joined to a fifth and last part 26 inclined frontally that continues downward up to reach the front edge of the respective side part 17.

With this shaped profile 20, the side vertical flanks 18 and 19 create each one a first containing and protecting back area 27 for the driver's bust, which is slightly re-entering inward the seat 10, in correspondence of the first two parts 22 and 23 of the same profile 20, furthermore each one of them creates a second containing and protecting central area 28 for the driver's hips, in correspondence of the third part 24 of the of the profile 20, and finally each one of them creates a third containing and protecting front area 29 for the driver's thighs, so that the same driver has a correct driving position as far as the bust is concerned and also he has the legs supported according to the natural driving position of a kart, in which they find themselves in the bent position.

The seat 10, having advantageously these flanks 18 and 19 very raised, offers an excellent protection to the driver's body, contrary to the seats used at the present time.

Finally, the upper peripheral edge 30 of the seat 10 has an external curvature downward, in such a way as to increase the mechanical strength thereof

The third concave upward part 24 of the profile 20 has a function of weakening the flanks 18 and 19 by making an upper recess 24', in such a way that their back part 27 and their front part 29 be advantageously not constrained to each other, contrary to the seats used at the present time, by allowing the seat 10 to perform some side flexions and torsions when the forces are applied during the driving phase, in particular during the acceleration and deceleration phases and along the curves, so that the same seat 10 may absorb these forces by deforming itself and by following the side movements of the driver, thereby increasing the comfort and the performances of the drive.

As initially specified, a plurality of said intermediate reinforcing elements 31 is included into the seat 10, which elements are each constituted by a layer of synthetic aramid fiber and/or carbon fiber, and are adapted to stiff and to reinforce the most stressed areas of the same seat 10 in which they are included, in the ways and for the aims that will be described.

A first reinforcing element 32 is made with an horizontal central band 33, the end portions of which 34, 35 are extended downward with a parallelepiped shape, and such first element 32 is included into the seat 10 in such a way that the central band 33 be arranged in the upper part of the seatback 11 and follows the profile of its upper edge 21, and in such a way that the two end portions 34, 35 be arranged in the upper area of the back parts 27 of the flanks 18, 19 and follow the profile thereof. For unloading further on said first reinforcing element 32, it is possible to create some internal empty areas 36, such as for example in the joining area between the horizontal band and its two end portions 34, 35.

A second reinforcing element 37 is included into the seat area 12, and follows the shape and the surface thereof, and may be provided with a plurality of emptied weakening areas 38 positioned longitudinally in the interior thereof.

A third and a fourth reinforcing elements 39, 40, mirror-like shaped are arranged respectively in correspondence of said side portions 17 by extending toward the lower part 14 approximately up to its middle and by extending also vertically partially into the front parts 29 of the flanks 18, 19. Said third and fourth elements 39, 40 may be provided with internal emptied weakening areas 41. The above said reinforcing elements 32, 37, 39, 40 are arranged in to the areas submitted to high mechanical stresses, such as for example the areas for fixing to the kart frame and/or the areas impacting the ground, in such a way that it is reduced the risk of breaking of the same seat caused by the greater stress due to the fixing means (not shown) inserted therein, such as for example screws, rivets, brackets, etc.., contrary to the seats used at the present time, which are secured to the frame directly on to the weaker fiberglass.

The second reinforcing element 37, furthermore, included into the seat area 12, being situated at a little distance from the ground, often comes into contact therewith, and therefore is subjected to a strong abrasion, so that by using carbon fiber or better synthetic aramid fiber, it becomes more resistant to the impacts and the abrasions, and therefore it is advantageously more durable and safe than the classic seats realized of fiberglass only. Furthermore, by obtaining a stiff seat 12 with the addition of the reinforcing element 37, the driver doesn't deform it with its weight, and consequently it is obtained a driving with more comfort and more safe.

Finally, the reinforcing elements 39 and 40, by stiffening the seat in correspondence of the side portions 17, allows that the driver's thighs be always good supported in their lower part by maintaining them bent, and by increasing the driving comfort and safety.

With this above described solution therefore it is obtained a seat for kart that is always lightweight, and more ergonomic, durable and safe than the seats used at the present time.

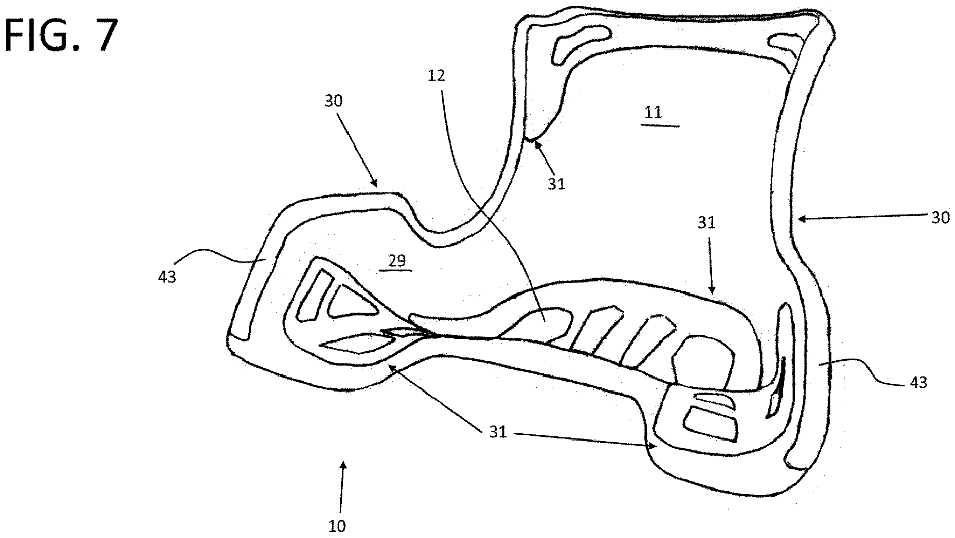

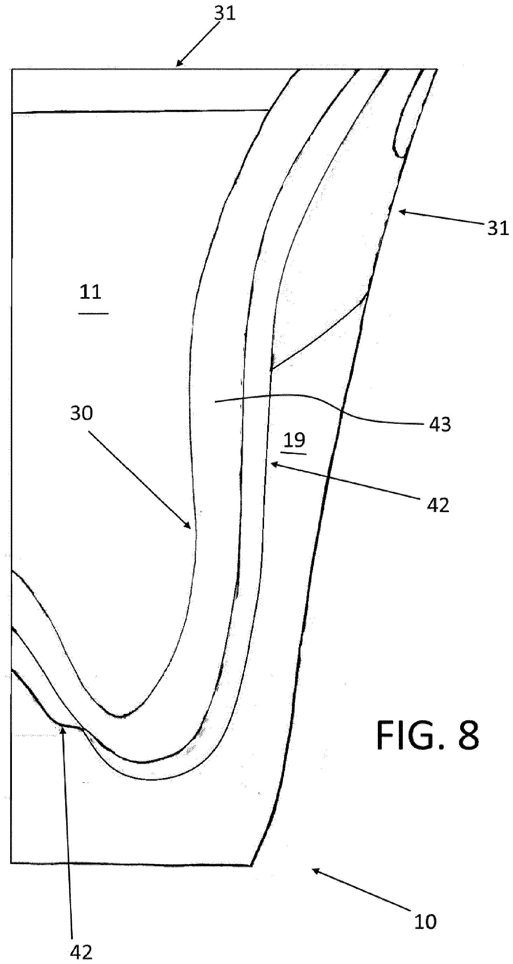

Said seat 10, in a second embodiment thereof, as visible in the Figs. 7 and 8, in addition to all the above described characteristics, has, into the lower hollow area 42 of the peripheral edge 30 obtained with its external curvature downward, at least a reinforcing lengthened element 43 that is partially included into said layers of materials overlapped to each other, and is adapted to increase the resistance to the transversal and/or longitudinal deformation of the same seat 10 for its entirety, or for some parts thereof only.

Such reinforcing element 43 is constituted by a rope 43 of the twisted type, realized with a plurality of strands made of natural fibers, such as for example cotton, linen, hemp, and/or synthetic fibers, such as for example of glass, of aramid, of carbon, and twisted onto themselves, and which therefore have a reduced weight and the capability to absorb the composite material into which they are included, thereby creating a reinforced shell seat 10 that be resistant to the longitudinal and transversal deformations and that has advantageously an integral body.

Depending on the area of the seat 10 intended to be stiffed, the seat may have an unique lengthened element 43 along the entire cavity 42 of the peripheral edge 30, or one lengthened element 43 arranged into a limited section of the cavity 42, or a plurality of lengthened elements 43 arranged in different sections of the cavity 42.

## Claims

1. Reinforced ergonomic seat (10) for racing vehicles, particularly for karts, adapted to house a driver in such a way as to increase the safety and the drive comfort, and particularly to absorb the forces generated during the guide in the phases of acceleration, of deceleration, and during the curves and for limiting the wear and the possibility of breaking of the same seat due to the mechanical stresses in to the fixing points to the frame of the vehicle and due to the impacts with the ground, said seat (10) being realized with a shaped shell form constituted by a seatback (11) joined to a seat (12), both closed laterally by two vertical side flanks (18, 19), **characterized in that** said seat (10) is made with a plurality of layers of different materials overlapped to each other, constituted by at least two lower layers of fiberglass, by a plurality of intermediate reinforcing elements (31) overlapped to said first lower layers, and each constituted by a layer of reinforcing fibers, preferably aramid synthetic fibers and/or carbon fibers, and by at least two upper layers overlapped to said intermediate reinforcing layers (31) and constituted by fiberglass, said seatback (11) being inclined in the rear part from the bottom to the top with a concave curvature, and being joined at its lower part to the zone of the seat (12), comprising a first lower flat part (13) and a second front part (14) which is extended in front of said first flat part (13) with an inclination directed upward, said second front part (14) being linked in the front thereof with two horizontal side projected portions (17) linked to each other, for ensuring to the driver a correct driving position and the support of the legs of the same one, said seatback (11), said seat (12) and two side vertical flanks (18, 19) being shaped for containing and protecting the body and the thighs of the driver and for ensuring a side flexion and torsion of the so built seat (10), during all the distance covered by the kart onto which it is assembled.

2. Seat according to claim 1, **characterized in that** said flanks (18, 19) have an upper profile (20), with which each of them create in correspondence of the seatback (11) a first containing and protecting back area (27) for the driver's chest, in correspondence of the flat area (13) of the seat (12) a second containing and protecting central area (28) for the driver's hips, and in correspondence of the part (14) of the seat (12) a third containing and protecting front area (29) for the driver's thighs, said second central part (28) having an upper recess (24') with a profile concave upward (24) adapted to weaken the flanks (18 and 19), in such a way that their back part (27) and their front part (29) be not constrained to each other, by allowing the seat (10) to perform some side flexions and torsions required by the forces during the driving phase, such as for example during the acceleration and deceleration phases and during the curves, so that the same seat (10) may absorb these forces by deforming itself and following the side movements of the driver.

3. Seat according to claim 2, **characterized in that** said upper profile (20) joins the upper edge (21) of the seatback (11) to the front edge (21') of said side portions (17), and has a first horizontal part (22), that continues approximately up to the vertical of the back part of the seat (12), a second part inclined frontally (23), that continues downward approximately up to the middle of the seatback (11) and the middle of the seat (12), a third part constituted by the curved area concave upward (24), with the lowest point that remains in an upper position with respect to the horizontal side portions (17) and that continues approximately up to the middle of the curved profile (15) of the part (14) of the seat (12), a fourth part almost horizontal (25) joined to a fifth and last part (26) inclined frontally that continues downward up to reach the front edge of the respective side part (17).

4. Seat according to claim 1, **characterized in that** said intermediate reinforcing elements (31) are constituted by a first reinforcing element (32), by a second reinforcing element (37), and by a third and a fourth reinforcing elements (39, 40) equal and mirror-like to each other, said first, second, third and fourth reinforcing elements (32 ; 37 ; 39, 40) being arranged in to the areas of the seat (10) submitted to high mechanical stresses, such as for example the areas for fixing to the kart frame and/or the areas impacting the ground.

5. Seat according to claim 4, **characterized in that** said first reinforcing element (32) is positioned partially into the upper part of the seatback (11) and partially into the upper area of the back parts (27) of the flanks (18, 19) and follows the profile thereof.

6. Seat according to claim 5, **characterized in that** said first intermediate reinforcing element (32) is made with an horizontal central band (33) the end portions of which (34, 35) are extended downward with a parallelepiped shape, and such first element (32) is included into the seat (10) in such a way that the central band (33) be arranged in the upper part of the seatback (11) and follows the profile of its upper edge (21), and in such a way that the two end portions (34, 35) be arranged in the upper area of the back parts (27) of the flanks (18, 19) and follow the profile thereof.

7. Seat according to claim 4, **characterized in that** said second reinforcing element (37) is included into the seat area (12), by following the shape and the surface thereof, and is adapted to make the seat (12) more resistant to the abrasions and impacts caused by the contact with the ground.

8. Seat according to claim 4, **characterized in that** said third and fourth reinforcing elements (39 and 40) are arranged respectively in correspondence of said side portions (17) by extending it toward the lower part (14) approximately up to its middle and by extending it also vertically partially into the front parts (29) of the flanks (18, 19), said reinforcing elements (39 and 40) being adapted to stiffen the seat in correspondence of the side portions (17) in such a way that the driver's thighs be always good supported in their lower part by maintaining them bent, and by increasing the driving comfort and safety.

9. Seat according to claim 2, **characterized in that** said upper peripheral edge (30) of the seat (10) has an external curved bending directed downward, in such a way as to increase the mechanical strength thereof.

10. Seat according to claim 9, **characterized in that said** peripheral edge (30), with its external curvature downward, creates a lower hollow area (42), wherein at least a reinforcing lengthened element (43) is partially included into said layers of materials overlapped to each other, said reinforcing lengthened element (43) being adapted to increase the resistance to the transversal and/or longitudinal deformation of the same seat (10) for its entirety, or for some parts thereof only, such reinforcing element (43) being constituted by a rope (43) of the twisted type, realized with a plurality of strands made of natural fibers, such as for example cotton, linen, hemp, and/or synthetic fibers, such as for example of glass, of aramid, of carbon, and twisted onto themselves, and that therefore have a reduced weight and the capability to absorb the composite material into which they are included.

11. Seat according to claim 10, **characterized in that said** seat (10) has a unique lengthened element (43) along the entire cavity (42) of the peripheral edge (30).

12. Seat according to claim 10, **characterized in that said** seat (10) has a sole lengthened element (43) arranged into a limited section of the cavity (42) of the peripheral edge (30).

13. Seat according to claim 10, **characterized in that said** seat (10) has a plurality of lengthened elements (43) arranged in different limited sections of the cavity (42) of the peripheral edge (30).
